# EUROPÄISCHE PATENTSCHRIFT

(11) **EP 2 899 437 B1**
(45) Veröffentlichungstag und Bekanntmachung des Hinweises auf die Patenterteilung: **04.01.2017**
(21) Anmeldenummer: 15000084.2
(22) Anmeldetag: 15.01.2015
(51) Int. Cl.: F16K 47/04, F16K 11/078

(54) **Sanitäres Mischventil**
Sanitary mixing valve
Vanne mélangeuse sanitaire

(30) Priorität: 22.01.2014 DE 102014000840
(43) Veröffentlichungstag der Anmeldung: 29.07.2015
(73) Patentinhaber: Hansa Armaturen GmbH, 70567 Stuttgart (DE)
(72) Erfinder: Schrader, Jens, 70619 Stuttgart (DE); Hackspacher, Franz, 72622 Nürtingen (DE); Walter, Andreas, 72669 Unterensingen (DE)
(74) Vertreter: Wahl, Markus

(56) Entgegenhaltungen:
- WO-A1-89/01585
- DE-A1- 2 937 475

## Beschreibung

Die Erfindung betrifft ein sanitäres Mischventil mit
a) einem Gehäuse, das einen Einlass für Kaltwasser, einen Einlass für Warmwasser und einen Auslass für Mischwasser aufweist;
b) einer ersten, im Gehäuse feststehend angeordneten Steuerscheibe, die eine Durchtrittsöffnung für Kaltwasser, eine Durchtrittsöffnung für Warmwasser und eine Durchtrittsöffnung für Mischwasser aufweist;
c) einer zweiten Steuerscheibe, die auf der ersten Steuerscheibe verschiebbar aufliegt und eine Durchtrittsöffnung aufweist, welche die Durchtrittsöffnungen der ersten Steuerscheibe je nach Relativstellung der beiden Steuerscheiben mehr oder weniger überlappt;
d) einem Mitnahmeteil, welches bewegungsschlüssig mit der zweiten Steuerscheibe verbunden ist;
e) einem Stellschaft, der in einem im Gehäuse drehbar gelagerten Führungsteil verschwenkbar gelagert ist und an einem Ende bewegungsschlüssig mit dem Mitnahmeteil verbunden ist;
   wobei
f) das Mitnahmeteil eine Vertiefung aufweist, welche gemeinsam mit der Durchtrittsöffnung der zweiten Steuerscheibe einen Umlenkkanal für das sich mischende Wasser bildet und eine geräuschdämpfende Einrichtung in Form einer Mehrzahl von Rippen umfasst, die sich vom Grunde der Vertiefung weg in die Durchtrittsöffnung der zweiten Steuerscheibe hinein erstrecken.

Seit vielen Jahrzehnten befassen sich die Hersteller von Sanitärarmaturen mit dem Problem, einerseits die Geräuschentwicklung beim Wasserfluss durch die Sanitärarmaturen zu minimieren, andererseits aber die Durchflusskapazität durch die geräuschdämpfenden Maßnahmen nicht zu sehr zu verringern und der Gefahr einer weiteren Reduzierung der Durchflussmengen durch Verkalkungen entgegenzuwirken.

Diesem Ziel sind sanitäre Mischventile der eingangs genannten Art, wie sie etwa in der DE 29 37 475 A1 beschrieben sind, bereits sehr nahe gekommen. In dieser Druckschrift wird ein Ausführungsbeispiel beschrieben, bei dem eine Vielzahl von plattenförmigen Rippen als geräuschdämpfende Einrichtung verwendet wird. Diese Rippen erstrecken sich vom Boden der Vertiefung im Mitnahmeteil in die Durchtrittsöffnung der beweglichen Steuerscheibe hinein; sie sind im Wesentlichen auf denjenigen Bereich innerhalb der Durchtrittsöffnung der beweglichen Steuerscheibe und der Vertiefung des Mitnahmeteils beschränkt, der nahe an den Durchtrittsöffnungen für Kalt- und Warmwasser in der feststehenden Steuerscheibe liegt. Die Durchtrittsöffnung der beweglichen Steuerscheibe ist im Wesentlichen oval mit zwei gegenüberliegenden parallelen, ebenen Begrenzungswänden, die auf gegenüberliegenden Seiten durch kreisbogenförmige Begrenzungswände miteinander verbunden sind.
Die Rippen verlaufen in konstantem Abstand zueinander parallel zu den ebenen Begrenzungswänden der Durchtrittsöffnung.

Wie bereits angemerkt, dauern die Bestrebungen der Hersteller von Sanitärarmaturen an, eine optimale Geräuschdämpfung bei möglichst geringer Drosselung des Wasserstromes zu erzielen.

Aufgabe der vorliegenden Erfindung ist es daher, ein sanitäres Mischventil der eingangs genannten Art so auszugestalten, dass bei kleinstmöglicher Drosselung des Wasserstromes eine sehr gute Geräuschdämpfung erzielt wird.

Diese Aufgabe wird erfindungsgemäß dadurch gelöst, dass
g) die Durchtrittsöffnung der zweiten Steuerscheibe von der feststehenden Steuerscheibe aus gesehen schlüssellochförmig mit einem breiteren Bereich und einem schmaleren Bereich ist;
h) der breitere Bereich die Durchtrittsöffnungen für Kalt- und Warmwasser der ersten Steuerscheibe je nach Relativstellung der beiden Steuerscheiben mehr oder weniger überlappt;
i) der schmalere Bereich die Durchtrittsöffnung für Mischwasser der ersten Steuerscheibe überlappt;
k) die Rippen des Mitnahmeteils sich im Wesentlichen durch die ganze Vertiefung erstrecken und an den Enden, welche dem breiteren Bereich der Durchtrittsöffnung der zweiten Steuerscheibe benachbart sind, einen größeren Abstand von einander als an den gegenüberliegenden Enden besitzen.

Die besonders gute geräuschdämpfende Wirkung ohne übermäßige Drosselung wird erfindungsgemäß durch eine gezielte Abstimmung der Form der Durchtrittsöffnung der beweglichen Steuerscheibe einerseits und der Form der geräuschdämpfenden Einrichtung andererseits erzielt. Durch die Schlüssellochform der Durchtrittsöffnung der beweglichen Steuerscheibe lassen sich auch bei verhältnismäßig kleinen Radien der Steuerscheiben in diesen Durchtrittsöffnungen unterbringen, die unter Berücksichtigung der möglichen Bewegungen der beweglichen Steuerscheibe größtmögliche Durchströmungsquerschnitte ergeben. Durch die hierauf abgestimmte Form und Anordnung der geräuschdämpfenden Rippen wird das in die bewegliche Steuerscheibe einströmende Wasser möglichst wirbelfrei in Richtung auf diejenige Durchtrittsöffnung der feststehenden Steuerscheibe geleitet, welche das Mischwasser abführt.

Besonders bevorzugt ist, wenn die Rippen an ihren dem breiteren Bereich der Durchtrittsöffnung der zweiten Steuerscheibe benachbarten Enden tiefer in die Durchtrittsöffnung eintauchen als an den gegenüberliegenden Enden. Durch diese Maßnahme wird einerseis Sorge dafür getragen, dass die geräuschdämpfende Wirkung der Rippen gut ist. Diese ist umso besser, je näher die geräuschdämpfenden Rippen an die an einander anliegenden Begrenzungsflächen der beiden Steuerscheiben herangeführt werden. Da die Geräuschentwicklung bei kleinen Öffnungsgraden des Mischventils am größten ist, genügt es, wenn die geräuschdämpfenden Rippen nur an denjenigen Enden sehr weit in die Durchtrittsöffnung der beweglichen Steuerscheibe hineinreichen, die bei geringer Überlappung der Kalt- und Warmwasser zuführenden Durchtrittsöffnungen der ersten Steuerscheibe mit der Durchtrittsöffnung der zweiten Steuerscheibe angeströmt werden. Wird das Mischventil weiter geöffnet, kann die geräuschdämpfende Wirkung reduziert werden, um die Mischung von Kalt- und Warmwasser zu verbessern. Um die Drosselung durch die Rippen zu reduzieren, können die Rippen daher in Richtung auf ihr anderes Ende zu weniger weit in die Durchtrittsöffnung der beweglichen Steuerscheibe eintauchen.

Günstig ist ferner, wenn die Begrenzungsfläche der Vertiefung am Mitnahmeteil kugelkalottenförmig ist. Es hat sich herausgestellt, dass durch diese Kugelkalottenform eine weitgehend turbulenzfreie Durchströmung der Vertiefung des Mitnahmeteils erreicht wird.

In derselben Richtung zielt diejenige Ausgestaltung der Erfindung, bei welcher die in Azimutalrichtung verlaufende Wand des schmaleren Bereichs der Durchtrittsöffnung der zweiten Steuerscheibe kugelkalottenförmig ist, wobei Mittelpunkt und Radius der Kugel mit dem Mittelpunkt und Radius der Begrenzungsfläche der Vertiefung des Mitnahmeteils übereinstimmen. Auf diese Weise bilden die Vertiefung des Mitnahmeteiles und die Durchtrittsöffnung der beweglichen Steuerscheibe gemeinsam einen Umlenkkanal für das Wasser mit einer einheitlichen, kugelkalottenförmigen und strömungsgünstigen Begrenzungsfläche.

Ein Ausführungsbeispiel der Erfindung wird nachfolgend anhand der Zeichnung näher erläutert; es zeigen:
- Figur 1: einen Axialschnitt durch ein sanitäres Mischventil;

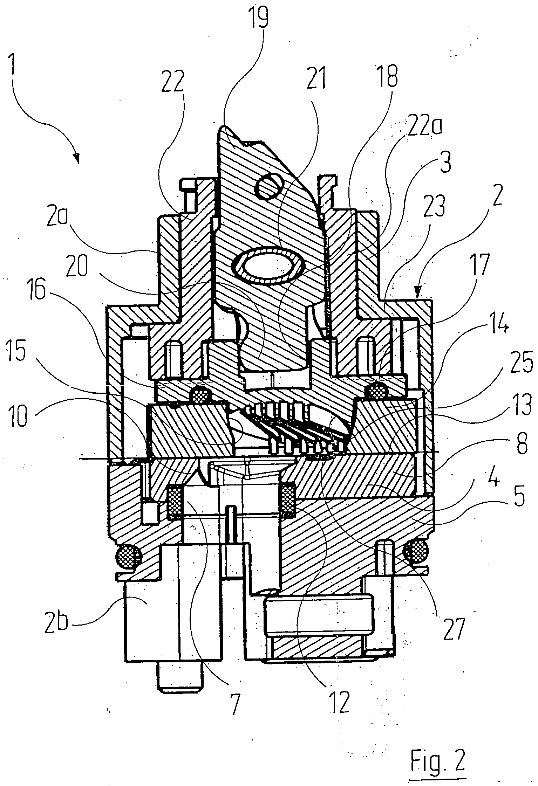

- Figur 2: einen Axialschnitt, ähnlich der Figur 2, jedoch in einer gegenüber Figur 1 verdrehten Schnittebene;
- Figur 3: einen Schnitt durch das sanitäre Mischventil der Figur 1 gemäß der dortigen Linie III-III;
- Figur 4: perspektivisch einen Einblick von unten in den oberen Teil des Mischventiles der Figur 1.

Das in der Zeichnung dargestellte und insgesamt mit dem Bezugszeichen 1 gekennzeichnete sanitäre Mischventil ist als Kartusche oder Steuerpatrone ausgestattet. Dies bedeutet, dass es in dieser Form zur Vervollständigung einer Sanitärarmatur in ein äußeres Sichtgehäuse eingesetzt und sodann mit einem Bedienungsgriff versehen wird. Armaturengehäuse und Bedienungsgriff sind jedoch nicht dargestellt.

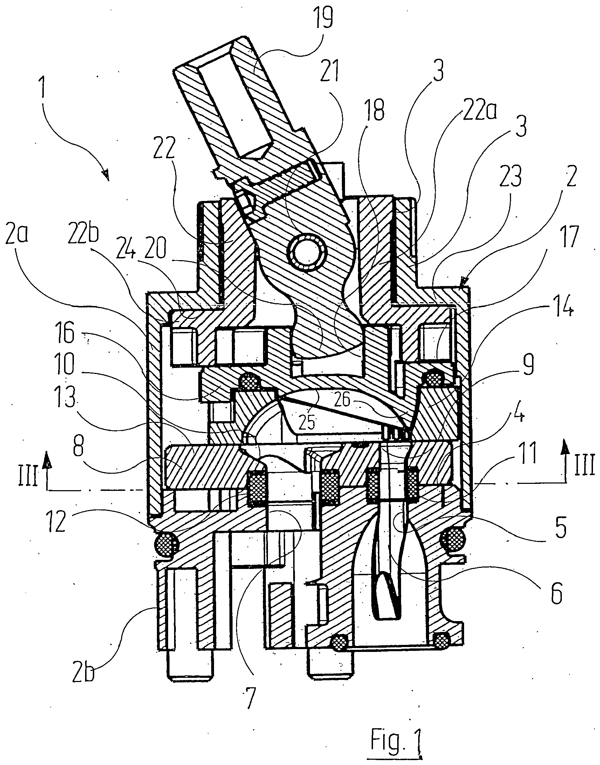

Das Mischventil 1 umfasst ein Gehäuse 2, das aus einem oberen Gehäuseteil 2a und einem unteren Bodenteil 2b zusammengesetzt ist. Das obere Gehäuseteil 2a ist hohlzylindrisch mit einem oberen, im Durchmesser etwas verkleinerten Kragen 3; das untere Bodenteil 2b ist ein etwas komplizierterer Formkörper, der an seiner Oberseite, die ins Innere des Gehäuses 2 weist, eine im Wesentlichen flache Auflageebene 4 besitzt. Details der Formgebung des unteren Bodenteils 2b sind im vorliegenden Zusammenhang ohne Belang. Es genügt zu wissen, dass durch das Bodenteil 2b drei Öffnungen hindurch verlaufen, die in die obere Auflagefläche 4 münden: zwei Öffnungen 5, von denen in Figur 1 nur eine erkennbar ist, nehmen jeweils eine Wasserzuleitung 6 zur Zuführung von Kalt- bzw. Warmwasser auf. Die dritte Öffnung 7 dient der Durchführung von Mischwasser von oben nach unten, das dann auf hier nicht näher beschriebene Weise zu einem Auslauf und/oder zu einer Dusche geführt wird. Diese Verhältnisse sind dem Fachmann bekannt und brauchen daher nicht näher erläutert zu werden.

Auf der Auflagefläche 4 des Bodenteiles 2b ist eine erste feststehende Steuerscheibe 8 angeordnet. Diese erste Steuerscheibe 8 besitzt zwei Durchtrittsöffnungen 9, von denen in Figur 1 nur eine erkennbar, ist und die jeweils mit einer der Wasserzufuhr dienenden Öffnung 5 des Bodenteils 2b fluchtend kommunizieren. Eine dritte Durchtrittsöffnung 10 der feststehenden Steuerscheibe 8 erweitert sich im oberen Bereich zu deren oberen Stirnfläche hin und kommuniziert im unteren Bereich fluchtend mit der Öffnung 7 des Bodenteiles 2b. Zwischen den Öffnungen 5, 7 des Bodenteiles und den mit diesen kommunizierenden Durchtrittsöffnungen 9, 10 der feststehenden Steuerscheibe 8 sind jeweils Dichtungen 11, 12 angeordnet, welche einen Wasseraustritt an diesen Stellen verhindern.

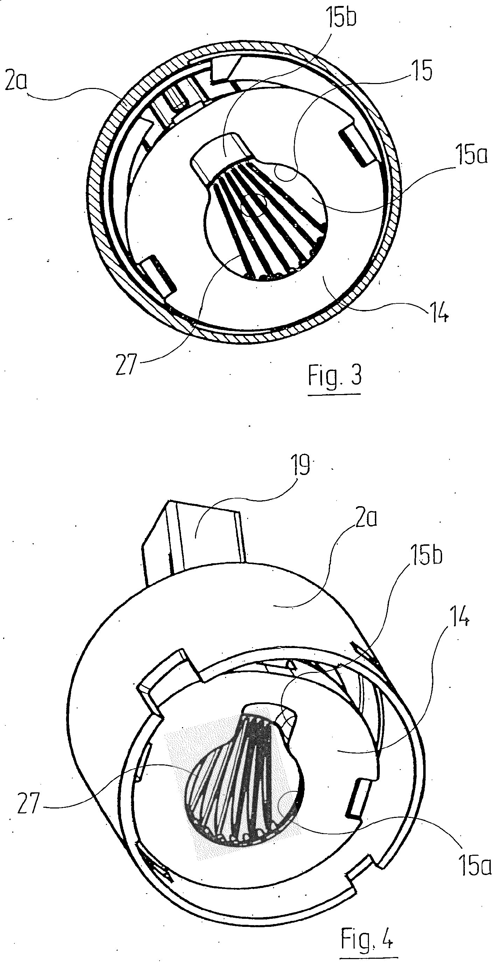

Auf der ebenen oberen Stirnfläche 13 der ersten feststehenden Steuerscheibe 8 liegt eine zweite, bewegliche Steuerscheibe 14 auf. Die bewegliche Steuerscheibe 14 ist besonders gut in den Figuren 3 und 4 zu erkennen. Sie ist in der Außenkontur kreisförmig, wobei jedoch ihr Durchmesser kleiner als der Innendurchmesser des Gehäuses 2 ist, so dass Raum für eine Verschiebung der beweglichen Steuerscheibe 14 innerhalb des Gehäuses 2 verbleibt.

Die Figuren 3 und 4 zeigen außerdem, dass die bewegliche Steuerscheibe 14 eine Durchtrittsöffnung 15 besitzt, deren Außenkontur als "schlüssellochförmig" bezeichnet werden kann. Unter "schlüssellochförmig" wird eine Form verstanden, die einen in der Draufsicht etwa kreisförmigen breiteren Hauptbereich 15a und einen sich an den Hauptbereich 15a anschließenden schmäleren Bereich 15b umfasst, der grob gesprochen rechteckig ist und dessen radial aussen liegende Begrenzungslinie einen an die feststehende Steuerscheibe 8 angepassten Radius aufweist. Dieser schmälere Bereich 15b ist, wie insbesondere der Figur 1 zu entnehmen ist, gegenüber der oberen Mündungsstelle der Durchtrittsöffnung 10 der feststehenden Steuerscheibe 8 positioniert, während der gegenüberliegende Endbereich des Hauptbereiches 15a in der Nähe der oberen Mündungsstellen der Durchtrittsöffnungen 9 der feststehenden Steuerscheibe 8 liegt und diese, je nach Position der beweglichen Steuerscheibe 14 auf der feststehenden Steuerscheibe 8 mehr oder weniger überlappt.

In Figur 1 ist zu erkennen, dass die radial außen liegende, in azimutaler Richtung verlaufende Wandung des schmäleren Bereiches 15b der Durchtrittsöffnung 15 der beweglichen Steuerscheibe 4 kugelkalottenförmig ausgebildet ist. Der Grund hierfür wird weiter unten näher erläutert.

Auf die obere Stirnseite der beweglichen Steuerscheibe 14 ist ein aus Kunststoff bestehendes Mitnahmeteil 16 formschlüssig aufgesetzt, derart, dass die Bewegungen, welche das Mitnahmeteil 16 ausführt, von der beweglichen Steuerscheibe 14 nachvollzogen werden. Das Mitnahmeteil 16 ist gegen die bewegliche Steuerscheibe 14 durch eine O-Ringdichtung 17 abgedichtet.

Von oben her ist in das Mitnahmeteil 16 eine Mitnahmeöffnung 18 eingeformt. Diese nimmt das als Mitnahmekopf 20 gestaltete untere Ende eines Stellschaftes 19 auf, der mittels einer Achse 21 in einem Führungsteil 22 gelagert ist. Bei dem Führungsteil 22 handelt es sich um ein rotationssymmetrisches Teil, welches einen oberen, im Durchmesser verjüngten Bereich 22a und einen unteren, im Durchmesser größeren Bereich 22b aufweist. Der Außendurchmesser des oberen Bereiches 22a stimmt so mit dem Innendurchmesser des Kragens 3 des Gehäuses 2 überein, dass das Führungsteil 22 in dem Gehäuse 2 drehbar geführt ist.

Die äußere Stufe 23, die zwischen dem oberen Bereich 22a und dem unteren Bereich 22b des Führungsteils 22 ausgebildet ist, liegt von unten her an einer inneren Stufe 24 des Gehäuses 2 an, die am Übergang zwischen dem Kragen 3 und dem im Durchmesser vergrößerten zylindrischen Bereich 2a des Gehäuses 2 vorliegt. Wird der Stellschaft 19 um diejenige geometrische Achse verdreht, welche das Führungsteil 22 und der Kragen 3 des Gehäuses 2 gemeinsam haben, so überträgt sich diese Drehung aufgrund einer geeigneten Formgebung zwischen dem Mitnahmekopf 20 des Stellschaftes 19 und der Mitnahmeöffnung 18 des Mitnahmeteils 16 auf die bewegliche Steuerscheibe 14. Wird der Stellschaft 19 um die Achse 21 verschwenkt, so verschiebt der Mitnahmekopf 20 das Mitnahmeteil 16 und damit die bewegliche Steuerscheibe 14 linear. Durch die geschilderten Bewegungen kann die Durchtrittsöffnung 15 mehr oder weniger in Überlappung mit den Durchtrittsöffnungen 9 der feststehenden Steuerscheibe 8 gebracht werden, wodurch in bekannter Weise sowohl das Mischungsverhältnis des durch die Öffnung 10 der feststehenden Steuerscheibe 8 und die Öffnung 7 des Bodenteiles 2b ausfließenden Mischwassers bestimmt wird.

Damit das durch die Durchtrittsöffnungen 9 der feststehenden Steuerscheibe 8 zugeführte Kalt- bzw. Warmwasser tatsächlich zur Durchtrittsöffnung 10 der feststehenden Steuerscheibe 8 gelangt, ist in der Unterseite des Mitnahmeteiles 16 eine Vertiefung 25 vorgesehen. Tatsächlich befindet sich diese Vertiefung 25 in einer Art Vorsprung 26, der an der Unterseite des Mitnahmeteiles 16 angeformt ist. Figur 1 zeigt, dass der Vorsprung 26 in demjenigen Bereich, welcher in der Nähe der Durchtrittsöffnungen 9 der ersten Steuerscheibe 8, also im Bereich des zufließenden Wassers liegt, verhältnismäßig tief in die Durchtrittsöffnung 15 der beweglichen Steuerscheibe 14 eingeführt ist.

Die Begrenzungsfläche 26 der Vertiefung 25 ist kugelkalottenförmig. Sie schließt dabei die kugelkalottenförmige Wand der Durchtrittsöffnung 15 in deren schmäleren Bereich 15b an, so dass insgesamt ein Rückführkanal 25, 26 mit kugelkalottenförmiger Begrenzungsfläche entsteht.

Wie besonders deutlich der Figur 4 zu entnehmen ist, ist an die Begrenzungsfläche 26 der Vertiefung 25 des Mitnahmeteiles 16 eine Vielzahl von Rippen 27 angeformt, die jeweils die Form schmaler Platten besitzen. Die Rippen 27 weisen in demjenigen Bereich, in den aus den Durchtrittsöffnungen 9 der feststehenden Steuerscheibe 8 Wasser zufließen kann, einen größeren Abstand voneinander auf als in demjenigen Bereich, welcher dem schmalen Bereich 15b der Durchtrittsöffmung 15 der beweglichen Steuerscheibe 14 benachbart ist. Auf diese Weise entsteht ein typisches "fächerförmiges" Gesamtbild der Rippen 27, die insgesamt eine Geräuschdämpfungseinrichtung bilden.

Die der unteren, also der feststehenden Steuerscheibe 8 zugewandten Ränder der Rippen 27 verlaufen schräg, derart, dass sie an dem Ende, in dem sie den größten Abstand voneinander besitzen, der feststehenden Steuerscheibe 8 am nächsten kommen.

Die Funktionsweise des oben beschriebenen sanitären Mischventils 1 ist wie folgt:
Kalt- und Warmwasser werden über die Öffnungen 5 des Bodenteiles 2b und die Durchtrittsöffnungen 9 der feststehenden Steuerscheibe 8 zugeführt. Je nach Relativstellung der beweglichen Steuerscheibe 14 gegenüber der feststehenden Steuerscheibe 8 tritt mehr oder weniger Kalt- und/oder Warmwasser in den Umlenkkanal ein, der von der Vertiefung 25 des Mitnahmeteils 16 und der Durchtrittsöffnung 15 der beweglichen Steuerscheibe 14 gebildet wird. Dieses zuströmende Wasser trifft auf die Rippen 27 und wird in seinem Fluss vergleichmäßigt, so dass Turbulenzen und damit Geräusche weitestgehend vermieden werden. Durch die Fächerform der Rippen 27 wird dieses Wasser so laminar wie möglich in Richtung auf den schmalen Bereich 15b der Durchtrittsöffnung 15 der beweglichen Steuerscheibe 14 geführt. Die Kugelkalottenform der Vertiefung 25 und des entsprechenden Wandabschnittes der Durchtrittsöffnung 15 der beweglichen Steuerscheibe 14 unterstützt dabei, ebenfalls die Geräuschentwicklung reduzierend, die weitgehend turbulenzfreie Strömung.

Aus der Durchtrittsöffnung 15 der beweglichen Steuerscheibe 14 tritt das in dem Umlenkkanal 15, 25 gemischte Wasser in die Durchtrittsöffnung 10 der feststehenden Steuerscheibe 8 ein und über die Öffnung 7 des Bodenteiles 2b des Gehäuses 2 aus.

## Patentansprüche

1. Sanitäres Mischventil mit
a) einem Gehäuse (2), das einen Einlass (5) für Kaltwasser, einen Einlass für Warmwasser und einen Auslass (7) für Mischwasser aufweist;
b) einer ersten, im Gehäuse (2) feststehend angeordneten Steuerscheibe (8), die eine Durchtrittsöffnung (9) für Kaltwasser, eine Durchtrittsöffnung für Warmwasser und eine Durchtrittsöffnung (10) für Mischwasser aufweist;
c) einer zweiten Steuerscheibe (14), die auf der ersten Steuerscheibe (8) verschiebbar aufliegt und eine Durchtrittsöffnung (15) aufweist, welche die Durchtrittsöffnungen (9, 10) der ersten Steuerscheibe (8) je nach Relativstellung der beiden Steuerscheiben (8, 14) mehr oder weniger überlappt;
d) einem Mitnahmeteil (16), welches bewegungsschlüssig mit der zweiten Steuerscheibe (14) verbunden ist;
e) einem Stellschaft (19), der in einem im Gehäuse (2) drehbar gelagerten Führungsteil (22) verschwenkbar gelagert ist und an einem Ende bewegungsschlüssig mit dem Mitnahmeteil (16) verbunden ist;
wobei
f) das Mitnahmeteil (16) eine Vertiefung (25) aufweist, welche gemeinsam mit der Durchtrittsöffnung (15) der zweiten Steuerscheibe (14) einen Umlenkkanal für das zu mischende Wasser bildet und eine geräuschdämpfende Einrichtung in Form einer Mehrzahl von Rippen (27) umfasst, die sich vom Grunde der Vertiefung (25) weg in die Durchtrittsöffnung (15) der zweiten Steuerscheibe (14) hinein erstrecken;
**dadurch gekennzeichnet, dass**
g) die Durchtrittsöffnung (15) der zweiten Steuerscheibe (14) von der feststehenden Steuerscheibe (8) aus gesehen schlüssellochförmig mit einem breiteren Bereich (15a) und einem schmaleren Bereich (15b) ist;
h) der breitere Bereich (15a) die Durchtrittsöffnungen (9) für Kalt- und Warmwasser der ersten Steuerscheibe (8) je nach Relativstellung der beiden Steuerscheiben (8, 14) mehr oder weniger überlappt;
i) der schmalere Bereich (15b) die Durchtrittsöffnung (10) für Mischwasser der ersten Steuerscheibe (8) überlappt;
k) die Rippen (27) des Mitnahmeteils (16) sich im Wesentlichen über die ganze Vertiefung (25) erstrekken und an den Enden, welche dem breiteren Bereich (15a) der Durchtrittsöffnung (15) der zweiten Steuerscheibe (14) benachbart sind, einen größeren Abstand voneinander als an den gegenüberliegenden Enden besitzen.

2. Sanitäres Mischventil nach Anspruch 1, **dadurch gekennzeichnet, dass** die Rippen (27) an ihren dem breiteren Bereich (15a) der Durchtrittsöffnung (15) der zweiten Steuerscheibe (14) benachbarten Enden tiefer in die Durchtrittsöffnung (15) eintauchen als am gegenüberliegenden Ende.

3. Sanitäres Mischventilan nach einem der vorhergehenden Ansprüche, **dadurch gekennzeichnet, dass** die Begrenzungsfläche der Vertiefung (25) des Mitnahmeteils (16) kugelkalottenförmig ist.

4. Sanitäres Mischventil nach Anspruch 3, **dadurch gekennzeichnet, dass** die in azimutaler Richtung verlaufende Wand des schmaleren Bereichs (15b) der Durchtrittsöffnung (15) der zweiten Steuerscheibe (14) kugelkalottenförmig ist, wobei Mittelpunkt und Radius der Kugel mit dem Mittelpunkt und Radius der Begrenzungsfläche der Vertiefung (25) des Mitnahmeteils (16) übereinstimmen.

## Claims

1. Sanitary mixing valve having
a) a housing (2) which has an inlet (5) for cold water, an inlet for hot water, and an outlet (5) for mixed water;
b) a first control disc (8) which is disposed so as to be stationary in the housing (2) and which has a passage opening (9) for cold water, a passage opening for hot water, and a passage opening (10) for mixed water;
c) a second control disc (14) which bears so as to be displaceable on the first control disc (8) and which has one passage opening (15) which more or less overlaps the passage openings (9, 10) of the first control disc (8), depending on the relative position of the two control discs (8, 14);
d) an entrainment part (16) which is connected to the second control disc (14) in a movement-linked manner;
e) an actuating stem (19) which is pivotably mounted in a guide part (22) which is rotatably mounted in the housing (2), and which at one end is connected to the entrainment part (16) in a movement-linked manner;
wherein
f) the entrainment part (16) has a depression (25) which jointly with the passage opening (15) of the second control disc (14) forms a diversion duct for the water to be mixed and comprises a noise-damping installation in the form of a plurality of ribs (27) which extend away from the base of the depression (25) into the passage opening (15) of the second control disc (14);
**characterized in that**
g) the passage opening (15) of the second control disc (14), when viewed from the stationary control disc (8), has a key-hole shape having a comparatively wide region (15a) and comparatively narrow region (15b);
h) the comparatively wide region (15a) more or less overlaps the passage openings (9) for cold and hot water of the first control disc (8), depending on the relative position of the two control discs (8, 14);
i) the comparatively narrow region (15b) overlaps the passage opening (10) for mixed water of the first control disc (8);
k) the ribs (27) of the entrainment part (16) extend substantially across the entire depression (25), and at those ends that are adjacent to the comparatively wide region (15a) of the passage opening (15) of the second control disc (14) have a larger mutual spacing than at the opposite ends.

2. Sanitary mixing valve according to Claim 1, **characterized in that** the ribs (27) at the ends thereof that are adjacent to the comparatively wide region (15a) of the passage opening (15) of the second control disc (14) plunge into the passage opening (15) more deeply than at the opposite end.

3. Sanitary mixing valve according to one of the preceding claims, **characterized in that** the delimitation face of the depression (25) of the entrainment part (16) is of a spherical-cap shape.

4. Sanitary mixing valve according to Claim 3, **characterized in that** that wall of the comparatively narrow region (15b) of the passage opening (15) of the second control disc (14) that runs in the azimuthal direction is of a spherical-cap shape, wherein the centre and the radius of the sphere and the centre and the radius of the delimitation face of the depression (25) of the entrainment part (16) are congruent.

## Revendications

1. Mitigeur sanitaire comprenant
a) un carter (2) muni d'une admission (5) d'eau froide, d'une admission d'eau chaude et d'une sortie (7) d'eau mitigée ;
b) un premier disque de commande (8) occupant une position fixe dans ledit carter (2) et comportant un orifice (9) de passage d'eau froide, un orifice de passage d'eau chaude et un orifice (10) de passage d'eau mitigée ;
c) un second disque de commande (14) qui repose sur le premier disque de commande (8), avec faculté de coulissement, et comporte un orifice de passage (15) chevauchant plus ou moins les orifices de passage (9, 10) dudit premier disque de commande (8) en fonction de la position relative des deux disques de commande (8, 14) ;
d) une pièce d'entraînement (16) en liaison motrice avec ledit second disque de commande (14) ;
e) un arbre de réglage (19) qui est monté pivotant dans une pièce de guidage (22) montée à rotation dans ledit carter (2), et est en liaison motrice avec la pièce d'entraînement (16) à une extrémité ;
sachant que
f) ladite pièce d'entraînement (16) présente une renfoncement (25) matérialisant un canal de déviation de l'eau à mélanger, conjointement à l'orifice de passage (15) du second disque de commande (14), et est pourvue d'un dispositif d'amortissement acoustique revêtant la forme d'une pluralité de nervures (27) qui pénètrent dans ledit orifice de passage (15) dudit second disque de commande (14), à partir du fond dudit renfoncement (25) ;
**caractérisé par le fait que**
g) l'orifice de passage (15) du second disque de commande (14) est configuré, en observant à partir du disque fixe de commande (8), en un trou de serrure incluant une région (15a) de largeur supérieure et une région (15b) de largeur moindre ;
h) ladite région (15a), de largeur supérieure, chevauche plus ou moins les orifices de passage d'eau froide (9) et d'eau chaude dudit premier disque de commande (8), en fonction de la position relative des deux disques de commande (8, 14) ;
i) ladite région (15b), de largeur moindre, chevauche l'orifice (10) de passage d'eau mitigée dudit premier disque de commande (8) ;
k) les nervures (27) de la pièce d'entraînement (16) s'étendent pour l'essentiel sur l'intégralité du renfoncement (25) et sont plus espacées les unes des autres, au niveau des extrémités voisines de ladite région (15a) de largeur supérieure dans ledit orifice de passage (15) dudit second disque de commande (14), qu'au niveau des extrémités pointant à l'opposé.

2. Mitigeur sanitaire selon la revendication 1, **caractérisé par le fait que** les nervures (27) pénètrent plus profondément dans l'orifice de passage (15), au niveau de leurs extrémités voisines de la région (15a) de largeur supérieure dans ledit orifice de passage (15) du second disque de commande (14), qu'au niveau de l'extrémité pointant à l'opposé.

3. Mitigeur sanitaire selon l'une des revendications précédentes, **caractérisé par le fait que** la surface de délimitation du renfoncement (25) de la pièce d'entraînement (16) revêt la forme d'une calotte sphérique.

4. Mitigeur sanitaire selon la revendication 3, **caractérisé par le fait que** la paroi de la région (15b) de largeur moindre dans l'orifice de passage (15) du second disque de commande (14), s'étendant dans la direction azimutale, revêt la forme d'une calotte sphérique, le centre et le rayon de la sphère coïncidant avec le centre et le rayon de la surface de délimitation du renfoncement (25) de la pièce d'entraînement (16).
